# EUROPÄISCHE PATENTANMELDUNG

(11) **EP 0 972 673 A2**
(43) Veröffentlichungstag der Anmeldung: **19.01.2000**
(21) Anmeldenummer: 99110650.1
(22) Anmeldetag: 02.06.1999
(51) Int. Cl.: B60N 2/44

(54) **Sitz für ein Kraftfahrzeug**

(30) Priorität: 20.06.1998 DE 19827563
(71) Anmelder: Bayerische Motoren Werke Aktiengesellschaft, 80788 München (DE)
(72) Erfinder: Schober, Thomas, 80995 München (DE); Brandt, Claus, 81547 München (DE)

(57) **Zusammenfassung**

Die Rückenlehne (1) eines Sitzes für ein Kraftfahrzeug besteht aus einer Schale (2) mit einer Polsterauflage sowie einer flächigen Außenschale (3) zur Abdeckung der polsterabgewandten Rückseite der Schale (2). Schale (2) und Außenschale (3) sind entlang ihrer Randbereiche miteinander verbunden, wodurch eine tragende Struktur aus mehreren Hohlprofilen (14 bis 16) gebildet wird. In die Schale (2) ist eine Basisbefederung in Form streifenförmiger Federelemente (20) sowie eine Lordosenstütze (22) einstückig integriert.

## Beschreibung

Die Erfindung bezieht sich auf einen Sitz für ein Kraftfahrzeug nach dem Oberbegriff des Anspruchs 1.

Aus der DE 44 01 665 C2 ist ein Sitz für ein Kraftfahrzeug bekannt, dessen Sitzkissen und/oder Rückenlehne eine Schale aus glasfaserverstärktem Kunststoff aufweist. Die dem Sitzbenutzer zugewandte Stützfläche der Schale wird von einer Mehrzahl streifenförmiger Federelemente gebildet, die sich bogenförmig über die Schalenebene erheben.

Nachteilig bei dem bekannten Sitz ist, daß die Schale in sich keine ausreichende Festigkeit und Steifigkeit aufweist, um einen Fahrzeuginsassen tragen zu können. Deshalb ist in konventioneller Bauweise nach wie vor ein Rahmen oder eine Tragstruktur erforderlich, um die Schale zu einem tragfähigen Sitzkissen oder einer Rückenlehne zu ergänzen.

Aufgabe der Erfindung ist es, die Rückenlehne des bekannten Sitzes so weiterzubilden, mit dem Ziel, die Herstellungskosten und das Gewicht der Rückenlehne zu senken.

Diese Aufgabe wird durch die Merkmale des Anspruchs 1 gelöst. Kerngedanke ist es dabei, die Schale einerseits und eine als rückseitige Abdeckung der Schale dienende Außenschale andererseits zur Bildung einer tragenden Struktur der Rückenlehne miteinander zu verbinden. Um eine ausreichende Steifigkeit zu erreichen, sind erfindungsgemäß Schale und Außenschale hierbei so ausgebildet, daß sie nach ihrer Verbindung wenigstens ein Hohlprofil mit einem entsprechend großen Widerstandsmoment gegenüber Biegung und Torsion bilden. Gemäß den Ansprüchen 2 und 3 verlaufen die hohlprofilartigen Abschnitte dabei entlang der Randbereiche der Rückenlehne. Gemäß Anspruch 4 kann auch der Bereich der Kopfstütze einstückig angeformt und hohlprofilartig ausgebildet sein.

Erfindungsgemäß wird die tragende Struktur der Rückenlehne von der Schale und der Außenschale selbst gebildet, so daß eine zusätzliche Tragstruktur, die bei bekannten Sitzen beispielsweise von einem Rahmen aus einem metallischen Werkstoff gebildet wird, entfallen kann. Damit kommt der Außenschale, die aus Gründen des äußeren Erscheinungsbildes als Abdeckung des zerklüfteten Inneren sowieso erforderlich ist, eine weitere Funktion zu, woraus sich Vorteile hinsichtlich der Herstellkosten und des Gewichtes ergeben. Insbesondere bei Verwendung faserverstärkter Kunststoffe wird gegenüber Rückenlehnen mit metallischen Tragstrukturen eine deutliche Gewichtsreduzierung erzielt. Außerdem verbessert sich durch die Verwendung eines einheitlichen Materials die Recyclingfähigkeit des Sitzes.

Gemäß Anspruch 5 weist die Schale einstückig angeformte Federelemente auf, wie an sich bereits aus der DE 44 01 665 C2 oder der DE 29 52 499 02 bekannt. Diese Federelemente verlaufen gemäß Anspruch 6 streifenförmig im wesentlichen in Richtung der Höhenerstreckung der Rückenlehne. In besonders vorteilhafter Weise verlaufen die Federelement dabei so im Raum, daß sie eine der Kontur des Rückens eines Sitzbenutzers angepaßte räumliche Erstreckung aufweisen (Anspruch 7). Durch dieses 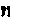 Spiegelbild" des Rückens in der Basisbefederung der Rückenlehne wird eine deutliche Komforterhöhung erzielt. Außerdem kann die Dicke der Polsterauflage reduziert werden, da sich durch die Basisbefederung eine gleichmäßige Verteilung der Last ergibt. Hierdurch ist eine Gewichtsminderung sowie eine bessere Bauraumausnutzung möglich.

Gemäß Anspruch 8 ist die Elastizität der einzelnen Federelemente so bemessen, daß sich über der Fläche des Rückens des Sitzbenutzers eine den anatomischen Gegebenheiten entsprechende Stützwirkung durch die Basisbefederung einstellt. Die unterschiedlichen elastischen Eigenschaften können durch lokale Erhöhungen oder Minderungen der Wandstärke sowie durch die Geometrie (Ausbrüche, Verbreiterungen, Prägungen, Falze etc.) der Federelemente beeinflußt werden. In den Bereichen, in denen Druckspitzen auftreten (zum Beispiel im Lenden- und Schulterbereich des Sitzbenutzers) wird durch eine entsprechend breitere Ausbildung der Federelemente eine flächige Abstützung erreicht, die dem Wohlbefinden des Sitzbenutzers entgegenkommt (Anspruch 9).

Auch kann im Lendenbereich im Sinn einer Lordosenstütze wenigstens ein in Richtung der Breitenerstreckung der Rückenlehne verlaufendes Federelement vorgesehen sein (Anspruch 10). Dieses Federelement ist, ebenso wie die übrigen Federelemente, bevorzugt einstückig an die Schale angeformt.

Schale und Außenschale werden beispielsweise durch Verklebung, Verschweißung etc. (Anspruch 11) oder durch Vernietung, Verschraubung etc. (Anspruch 12) miteinander verbunden.

Die Herstellung von Schale und Außenschale erfolgt durch Thermoumformen eines entsprechenden flächigen Kunststoffhalbzeuges, insbesondere eines faserverstärkten Kunststoffes, und anschließendes Beschneiden. Ebenso kann das Thermoumformen auch nach dem Beschnitt erfolgen. Grundsätzlich ist auch eine Herstellung von Schale und Außenschale im Spritzgußverfahren möglich.

Ein mögliches Ausführungsbeispiel der Erfindung ist in der Zeichnung dargestellt und wird nachfolgend näher erläutert. Es zeigt:

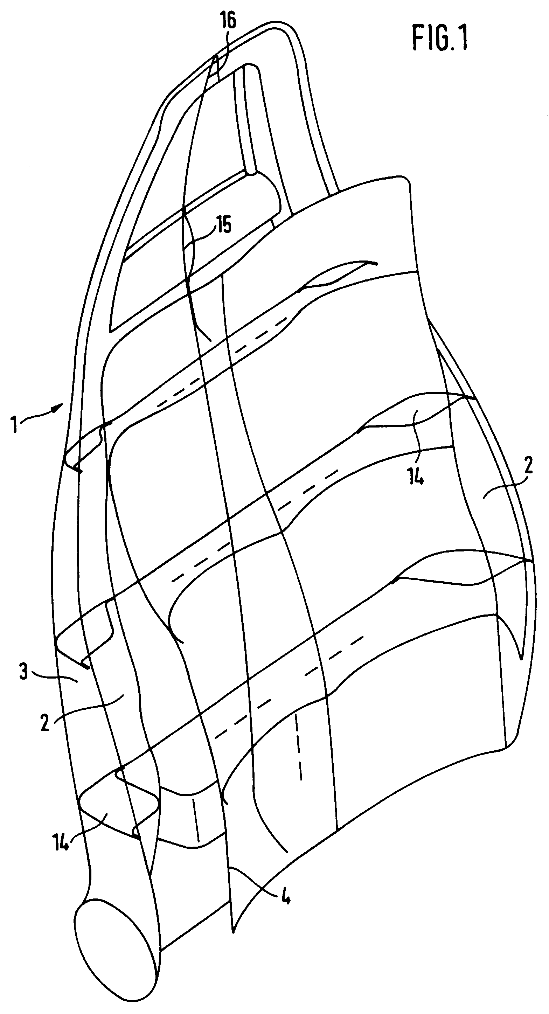

- Figur 1: eine erfindungsgemäße Rückenlehne in perspektivischer Ansicht, mit der Darstellung der Rückenkontur eines Sitzbenutzers, mit einem Querschnitt und mehreren Höhenschnitten,
- Figur 2: eine auseinandergezogene perspektivische Ansicht von Schale und Außenschale,
- Figur 3: den Querschnitt gemäß Figur 1 in ebener Darstellung und
- Figuren 4a bis 4c: die Höhenschnitte gemäß Figur 1 in ebener Darstellung.

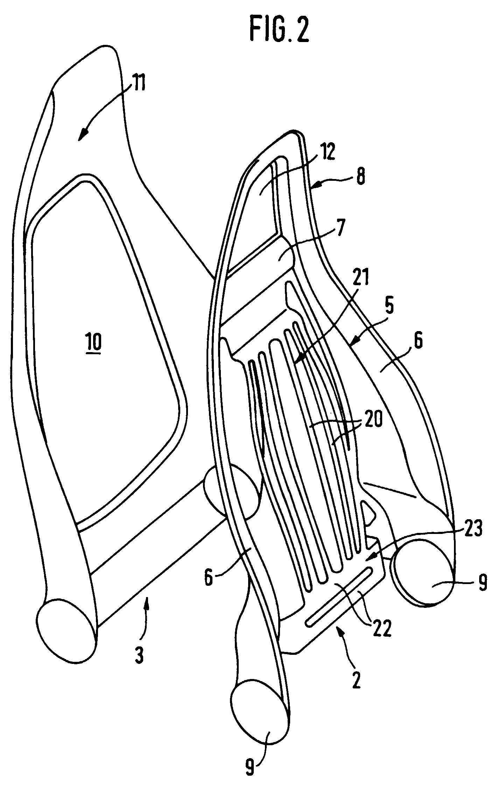

Eine Rückenlehne 1 für einen Sitz eines Kraftfahrzeuges setzt sich aus einer Schale 2 sowie einer rückseitigen Außenschale 3 zusammen. Die Polsterauflage der Rückenlehne 1 ist nicht dargestellt. Mit Ausnahme der Figur 2 ist in der Zeichnung jeweils die Kontur 4 des Rückens eines Sitzbenutzers am Beispiel eines sogenannten 95 %-Mannes wiedergegeben.

Die Schale 2 der Rückenlehne 1 besteht aus einem faserverstärkten Kunststoff. Sie wird von einem etwa trapezförmigen Rahmen 5 eingefaßt, der zwei Seitenabschnitte 6 sowie einem oberen Abschnitt 7 aufweist (Figur 2). Die Trapezform des Rahmens 5 setzt sich in einer Kopfstütze 8 fort. An den unteren Enden der Seitenabschnitte 6 sind Anschlußbereiche 9 für die Anbindung der Rückenlehne 1 an den restlichen Fahrzeugsitz vorgesehen.

Die Außenschale 3 besteht ebenso wie die Schale 2 einstückig aus faserverstärktem Kunststoff und ist als geschlossenflächiges Bauteil zur Abdeckung der Schale 2 ausgebildet. Damit hat es im wesentlichen die Form der Schale 2 mit einer im Mittenbereich ihrer Fläche in Richtung auf die Schale 2 zuweisenden Einprägung 10. Im Gegensatz zur Schale 2 ist der obere Bereich 11 der Außenschale 3 ebenfalls geschlossenflächig ausgebildet und überdeckt somit eine Öffnung 12 der Kopfstütze 8 der Schale.

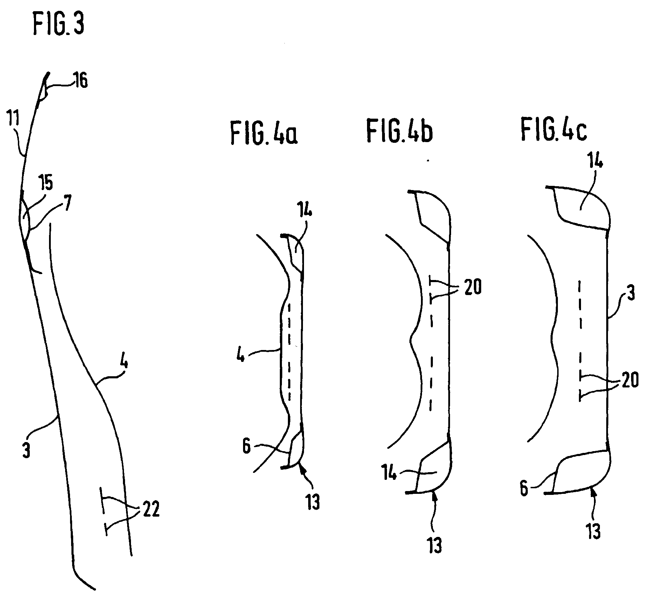

Die Schale 2 ist entlang ihres Rahmens 5 mit der Außenschale 3 verbunden. Wie insbesondere aus den Höhenschnitten 4a bis 4c hervorgeht, sind die seitlichen Randbereiche 13 der Außenschale 3 einwärts eingezogen und bilden mit den Seitenabschnitten 6 des Rahmens 5 der Schale 2 jeweils ein Hohlprofil 14. Auch der obere Abschnitt 7 der Schale 2 und der Außenschale 3 bilden zusammen ein Hohlprofil 15, so daß sich ein trapezförmiger, unten offener Hohlprofilrahmen ergibt, der sich aufgrund des großen Querschnittes der Hohlprofile 14 und 15 durch eine hohe Steifigkeit bei gleichzeitig besonders niedrigem Gewicht auszeichnet. Durch ein weiteres Hohlprofil 16 am oberen Endabschnitt der Rückenlehne 1 (Figur 3) wird die Kopfstütze 8 zusätzlich versteift.

Die Schale 2 weist eine Vielzahl von Durchbrüchen auf, durch die eine Mehrzahl etwa vertikal verlaufender Federelemente 20 gebildet werden, die die Basisbefederung der Rückenlehne 1 des Fahrzeugsitzes darstellen. Durch die einstückige Ausbildung der Federelemente 20 mit der Schale 2 ergibt sich ein sehr geringer Montageaufwand, da zum Zusammenbau der Rückenlehne lediglich Schale 2, Außenschale 3 und Polsterauflage miteinander zu verbinden sind. Die Federelemente 20 weisen in Breitenerstreckung der Rückenlehne 1 unterschiedliche Abstände auf. Außerdem sind sie entsprechend der Anatomie des Rückens (Kontur 4) eines Sitzbenutzers geformt und verlaufen somit nicht in einer Ebene. Die Federelemente 20 können, abweichend von der Darstellung, auch unterschiedliche Breiten sowie unterschiedliche Materialdicken aufweisen. Insbesondere ist es vorteilhaft, die Breite der Federelemente 20 im Bereich 21 zu vergrößern, um hier eine flächige Auflage für die Schulterblätter eines Sitzbenutzers bereitzustellen. Ähnliches gilt für den Lendenbereich 23, in dem aufgrund der hier auftretenden Druckspitzen querverlaufende Federelemente 22 entsprechender Breite vorgesehen sind, die als Lordosenstütze wirken und gleichzeitig eine stabile Anbindung der Federelemente 20 gewährleisten.

Die Federelemente 20 und 22 bewirken eine flächige Abstützung, wodurch in der Verbindung mit der körpergerechten Konturierung der Federelemente 20 und 22 eine Polsterauflage geringer Dicke verwendet werden kann, während bei einer Befederung beispielsweise mit Federelementen aus Stahl durch die in der Regel nur punktuelle oder linienförmige Abstützung deutlich größere Polsterdicken erforderlich sind. Die Aufgabe der Polsterauflage, eine gleichmäßige Druckverteilung zu erreichen, wird bei der erfindungsgemäßen Rückenlehne 1 bereits von der Basisbefederung mitgetragen. Durch die Integration der Basisbefederung in die Schale 2 und die tragende Funktion der Einheit aus Schale 2 und Außenschale 3 ergibt sich eine hohe Funktionsdichte, mit Vorteilen hinsichtlich des Bauraumbedarfes und des Gewichtes.

## Patentansprüche

1. Sitz für ein Kraftfahrzeug, mit einer Rückenlehne mit einer Polsterauflage und einer darunter angeordneten Schale aus einem Kunststoffmaterial, dadurch gekennzeichnet, daß an der polsterabgewandten Rückseite der Schale (2) eine flächige Außenschale (3) aus einem Kunststoffmaterial vorgesehen ist, die mit der Schale (2) verbunden ist, wobei die Randbereiche (6, 7) von Schale (2) und Außenschale (3) zumindest abschnittsweise so gestaltet sind, daß sie zusammen wenigstens ein Hohlprofil (14, 15, 16) bilden.

2. Sitz nach Anspruch 1,
dadurch gekennzeichnet, daß jeweils ein Hohlprofil (14) an den Seitenbereichen der Rückenlehne (1) verläuft.

3. Sitz nach Anspruch 1 und/oder 2,
dadurch gekennzeichnet, daß ein Hohlprofil (15) am oberen und/oder unteren Endabschnitt der Rückenlehne (1) verläuft.

4. Sitz nach einem der vorgenannten Ansprüche,
dadurch gekennzeichnet, daß Schale (2) und Außenschale (3) sich oberseitig in einer Kopfstütze (8) fortsetzen, deren Randbereich zumindest abschnittsweise von wenigstens einem Hohlprofil (15, 16) gebildet wird.

5. Sitz nach einem der vorgenannten Ansprüche,
dadurch gekennzeichnet, daß die Schale (2) einstückig angeformte Federelemente (20, 22) aufweist, die den Rücken eines Sitzbenutzers nachgiebig stützen.

6. Sitz nach Anspruch 5,
dadurch gekennzeichnet, daß die Federelemente (20) streifenförmig sind und im wesentlichen in Richtung der Höhenerstreckung der Rückenlehne (1) verlaufen.

7. Sitz nach einem der vorgenannten Ansprüche,
dadurch gekennzeichnet, daß die Federelemente (20) eine der Kontur (4) des Rückens eines Sitzbenutzers angepaßte räumliche Gestalt aufweisen.

8. Sitz nach einem der vorgenannten Ansprüche,
dadurch gekennzeichnet, daß die Federeigenschaften der Federelemente (20, 22) durch Bemessung der Materialstärke und/oder Gestaltung der Geometrie der Federelemente (20, 22) über der Fläche der Rückenlehne (1) entsprechend den anatomischen Erfordernissen festgelegt sind.

9. Sitz nach einem der vorgenannten Ansprüche,
dadurch gekennzeichnet, daß die Federelemente (20, 22) im Schulterund/oder Lendenbereich (21 bzw. 23) gegenüber den übrigen Bereichen eine flächigere Ausbildung aufweisen.

10. Sitz nach einem der vorgenannten Ansprüche,
dadurch gekennzeichnet, daß im Lendenbereich (23) wenigstens ein im wesentlichen in Breitenerstreckung der Rückenlehne (1) verlaufendes Federelement (22) vorgesehen ist.

11. Sitz nach einem der vorgenannten Ansprüche,
dadurch gekennzeichnet, daß Schale (2) und Außenschale (3) stoffschlüssig miteinander verbunden sind.

12. Sitz nach einem der vorgenannten Ansprüche,
dadurch gekennzeichnet, daß Schale (2) und Außenschale (3) durch Verbindungselemente miteinander verbunden sind.
